# EUROPEAN PATENT APPLICATION

(11) **EP 2 383 717 A1**
(43) Date of publication of application: **02.11.2011**
(21) Application number: 09841798.3
(22) Date of filing: 20.10.2009
(51) Int. Cl.: G09F 9/30, G02F 1/1347, G09F 9/40, H01L 51/50, H05B 33/02

(54) **DISPLAY DEVICE**

(30) Priority: 17.03.2009 JP 2009064236
(71) Applicant: Sharp Kabushiki Kaisha, Osaka-shi, Osaka 545-8522 (JP)
(72) Inventor: WATANABE, Noriko, Osaka-shi, Osaka 545-8522 (JP)
(74) Representative: Müller-Boré & Partner Patentanwälte
(86) International application number: PCT/JP2009/005496
(87) International publication number: WO 2010/106590

(57) **Abstract**

A display device includes a support member configured to support a first display section and a second display section each including a flexible substrate in a manner which allows the first and second display sections to be transformed into a closed position and an open position. The support member is configured to sandwich the first and second display sections, and has a first convex surface portion which supports a surface of the first display section opposite to the second display section when the first and second display sections are transformed, and a second convex surface portion which supports a surface of the second display section opposite to the first display section when the first and second display sections are transformed.

## Description

### TECHNICAL FIELD

The present invention relates to display devices at least a portion of which is made of a flexible substrate.

### BACKGROUND ART

In recent years, so-called flat panel displays, such as liquid crystal display devices, organic EL display devices, etc., have been expected to be widely applicable in various fields. In particular, because of their thin thickness and light weight, flat panel displays are preferably used in the field of mobile devices, such as mobile telephones, PDAs, etc.

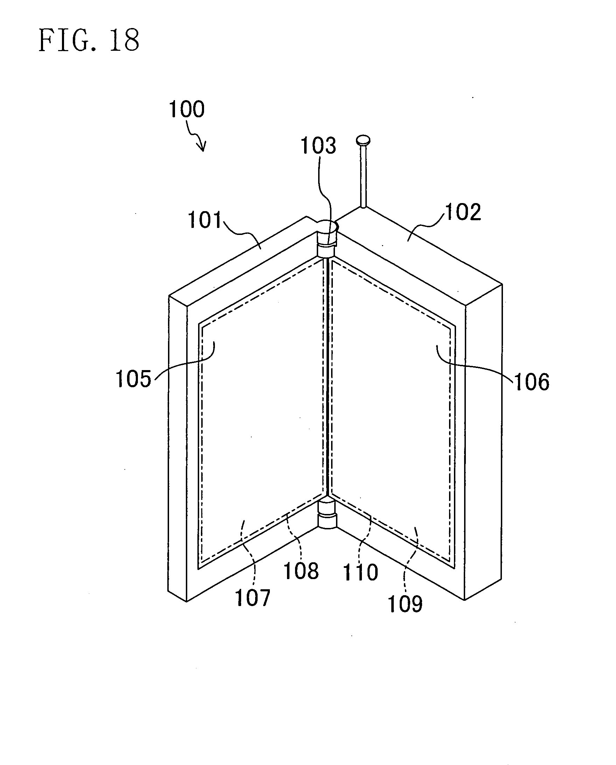

For example, PATENT DOCUMENT 1 describes a foldable display device 100 which is applied to a mobile telephone as shown in a perspective view of FIG. 18. In the display device 100, a first housing 101 and a second housing 102 are joined together by a hinge section 103. The first housing 101 is rotated around the hinge section 103 as a shaft axis with respect to the second housing 102, so that the first housing 101 and the second housing 102 are opened and closed.

A first display panel 105 is attached to the inner surface of the first housing 101. On the other hand, a second display panel 106 is attached to the inner surface of the second housing 102. The first display panel 105 has a display region 107 and a frame-shaped non-display region 108 provided around the outer periphery of the display region 107. On the other hand, the second display panel 106 similarly has a display region 109 and a frame-shaped non-display region 110 provided around the outer periphery of the display region 109.

When the first and second housings 101 and 102 are closed, the first and second display panels 105 and 106 face each other. On the other hand, when the first and second housings 101 and 102 are opened, the first and second display panels 105 and 106 are positioned side by side to form a series of screens.

In the field of flat panel displays, even thinner, lighter, and more flexible displays are desired. Flexible substrates made of plastic etc. instead of glass are being studied.

### CITATION LIST

### PATENT DOCUMENT

PATENT DOCUMENT 1: Japanese Patent Publication No. 2000-184026

### SUMMARY OF THE INVENTION

### TECHNICAL PROBLEM

Incidentally, flexible displays can be bent more easily if the elasticity of the substrate material is reduced or the thickness of the substrate is decreased. However, a single display cannot be folded perfectly flat. If the display is forcibly folded, irreversible transformation occurs, e.g., the substrate itself may be damaged, interconnects, electrodes, etc. formed on the substrate surface may be broken, etc.

On the other hand, as in PATENT DOCUMENT 1, two flat displays may be placed side by side in a manner which allows the two displays to be folded. However, a frame-shaped non-display region is formed at the outer edge of each display, and therefore, the non-display regions are placed side by side at a portion where the two displays are linked together. As a result, an entire image on the two displays is clearly divided by the non-display regions at the display linking portion, so that the quality of displaying is unavoidably significantly reduced.

The present invention has been made in view of the above problems. It is an object of the present invention to improve the quality of displaying even on a display device which is foldable or is allowed to open and close like a book.

### SOLUTION TO THE PROBLEM

In order to achieve the object, a display device according to the present invention includes a first display section, a second display section disposed adjacent to the first display section, and a support member configured to support the first and second display sections in a manner which allows the first and second display sections to be transformed into a closed position where the first and second display sections are stacked on each other and an open position where the first and second display sections are opened like a book. The first and second display sections each include a flexible substrate. The support member is configured to sandwich the first and second display sections, and has a first convex surface portion which supports a surface of the first display section opposite to the second display section when the first and second display sections are transformed, and a second convex surface portion which supports a surface of the second display section opposite to the first display section when the first and second display sections are transformed.

The display device may further include a middle section configured to link the first and second display sections together. The first display section, the second display section, and the middle section may constitute a single display panel.

The display device may further include a middle support member configured to support the middle section while the middle section is wound around the middle support member. A support surface of the middle support member around which the middle section is wound may be formed in a third convex surface portion.

The support member may have a concave surface portion which is formed to extend continuously from the first and second convex surface portions. The middle section may be supported by the concave surface portion.

The support member may have a concave surface portion which is formed to extend continuously from the first and second convex surface portions. The middle section may be sandwiched by the concave surface portion and the third convex surface portion.

The support member may have a first support member on which the first convex surface portion is formed and a second support member on which the second convex surface portion is formed.

In this case, the display device may further include a fixing member configured to fix end portions of the first and second support members together.

A circuit section may be provided in a region of the middle section supported by the third convex surface portion.

The display device may further include a middle support member having a fourth convex surface portion which supports a surface of the first display section opposite to the first support member, and a fifth convex surface portion which supports a surface of the second display section opposite to the second support member.

The first and second display sections may be an organic EL display panel.

The first and second display sections may be a liquid crystal display panel.

In this case, the first and second display sections may include a backlight including a plurality of light sources and a light guide plate on which light of the light sources is incident. The first and second display sections may include an auxiliary light source configured to emit light to a region of the light guide plate of the backlight which is supported by the first and second convex surface portions.

An auxiliary light source configured to illuminate regions in the vicinity of the first and second convex surface portions may be provided in the support member.

A display device according to the present invention includes a display panel including a flexible substrate, and a cover member configured to support the display panel in a manner which allows the display panel to be transformed into an open position and a closed position. The cover member includes a hinge section, and a first cover member and a second cover member engaged by the hinge section in a manner which allows the first and second cover members to swing, and is configured to be transformed into the closed position where the first and second cover members are stacked on each other and the open position where the first and second cover members are opened with respect to each other, by the first and second cover members swinging around a shaft axis of the hinge section. A support section configured to support the display panel in a manner which allows the display panel to move back and forth when the cover member is transformed is formed on each of the first and second cover members.

The support section may be an accommodation section configured to accommodate a side portion of the display panel in a manner which allows the side portion to move back and forth.

### - Advantages -

Next, advantages of the present invention will be described.

The first and second display sections each include a flexible substrate. Therefore, the first and second display sections can be transformed along the first and second convex surface portions of the support member, respectively. As a result, in the display device, the first and second display sections are transformed into a closed position and an open position.

Specifically, the first and second display sections in the closed position are gradually opened while the surface of the first display section opposite to the second display section is supported by the first convex surface portion of the support member and the surface of the second display section opposite to the first display section is supported by the second convex surface portion of the support member. The first and second display sections are eventually opened like a book, i.e., in the open position.

On the other hand, similarly, the first and second display sections in the open position are gradually closed while the surface of the first display section opposite to the second display section is supported by the first convex surface portion and the surface of the second display section opposite to the first display section is supported by the second convex surface portion. The first and second display sections are eventually stacked on each other, i.e., in the closed position.

Therefore, even if the first and second display sections have a non-display region, the first and second display sections can be transformed into the closed position or the open position while the non-display region is sandwiched and hidden by the support member 20. Therefore, when the first and second display sections are in the open position, the non-display region cannot be viewed by the user, so that an image which is continuous at a boundary between the first and second display sections can be displayed. As a result, although the display device of the present invention is foldable or is allowed to open and close like a book, the quality of displaying can be significantly improved.

The first and second display sections may be, for example, an organic EL display panel, a liquid crystal display panel, etc. The first and second display sections and the middle section may constitute a single display panel. In this case, the number of parts is reduced, so that the manufacture of the display device is facilitated. Moreover, in this case, if the middle section is supported by the third convex surface portion of the middle support member, the first and second display sections can be more stably supported and fixed.

When the support member has a concave surface portion which extends continuously from the first and second convex surface portions, then even if the entire support member is a single member, the first and second display sections and the middle section can be stably supported and fixed. Moreover, if the middle section is sandwiched by the concave surface portion of the support member and the third convex surface portion of the middle support member, the first display section etc. can be more securely supported and fixed.

Even if the support member includes two members, i.e., the first support member on which the first convex surface portion is formed and the second support member on which the second convex surface portion is formed, the first and second display sections can be supported and fixed. In this case, end portion of the first and second support members can be easily fixed together by a fixing member.

The middle section is not involved in displaying. Therefore, if a circuit section is provided in a region which is supported by the third convex surface portion, the available space can be efficiently used. In addition, the region is not transformed. As a result, the reliability of the circuit section can be increased.

Even when the middle section is not provided, then if the first display section is supported by the fourth convex surface portion from a side opposite to the first support member while the second display section is supported by the fifth convex surface portion from a side opposite to the second support member, the first and second display sections are bent into a concave-convex shape. As a result, the concentration of stress applied to these substrates can be reduced, resulting in an increase in reliability.

When the first and second display sections are a liquid crystal display panel, then if light of an auxiliary light source is caused to be incident on a region of a light guide plate of a backlight which is supported by the first and second convex surface portions, the luminance of display light at a boundary between the first and second display sections can be increased by the light of the auxiliary light source, resulting in an improvement in viewability.

Alternatively, an auxiliary light source configured to illuminate regions in the vicinity of the first and second convex surface portions may be provided in the support member. Also in this case, the viewability of display at the boundary between the first and second display sections can be improved.

When a display device includes a display panel including a flexible substrate, and a cover member configured to support the display panel in a manner which allows the display panel to be transformed into an open position and a closed position, the cover member is transformed into a closed position where the first and second cover members are stacked on each other and an open position where the first and second cover members are opened with respect to each other, by the first and second cover members being swung around the shaft axis of the hinge section. In this case, the display panel is moved back and forth by the transformation of the cover member while being supported by the support section.

When the cover member is in the closed position, opposite side portions of the display panel face each other. On the other hand, when the cover member is in the open position, the display panel is opened substantially flat. Therefore, in the open position, the display panel does not have a boundary between the left and right regions, so that a single large continuous image can be displayed on the entire display panel. As a result, although the display device is foldable or is allowed to open and close like a book, the quality of displaying can be dramatically improved.

Moreover, if the support section is an accommodation section configured to accommodate a side portion of the display panel, the display panel can be stably supported by the accommodation section.

### ADVANTAGES OF THE INVENTION

According to the present invention, even when the first and second display sections have a non-display region, the first and second display sections can be transformed into a closed position or an open position while the non-display region is sandwiched and hidden by the support member, so that the non-display region is not allowed to be viewed by the user when the first and second display sections are in the open position. Therefore, an image which is continuous at a boundary between the first and second display sections can be displayed. As a result, although the display device of the present invention is foldable or is allowed to open and close like a book, the quality of displaying can be significantly improved.

### BRIEF DESCRIPTION OF THE DRAWINGS

[FIG. 1] FIG. 1 is a perspective view showing an external appearance of a display device of a first embodiment.
[FIG. 2] FIG. 2 is a cross-sectional view showing a structure of the display device of the first embodiment in an open position.
[FIG. 3] FIG. 3 is a cross-sectional view showing a structure of the display device of the first embodiment in a closed position.
[FIG. 4] FIG. 4 is a perspective view showing an external appearance of a display device of a second embodiment.
[FIG. 5] FIG. 5 is a side view showing the display device of the second embodiment in an open position.
[FIG. 6] FIG. 6 is a perspective view showing an external appearance of a display device of a third embodiment.
[FIG. 7] FIG. 7 is a perspective view showing an external appearance of a display device of a fourth embodiment.
[FIG. 8] FIG. 8 is an enlarged perspective view showing a region in the vicinity of a fixing member of the display device of the fourth embodiment.
[FIG. 9] FIG. 9 is a cross-sectional view showing a structure of a display device of a fifth embodiment in a closed position.
[FIG. 10] FIG. 10 is a cross-sectional view showing a structure of a display device of a sixth embodiment in a closed position.
[FIG. 11] FIG. 11 is a cross-sectional view showing a structure of a display device of a seventh embodiment in an open position.
[FIG. 12] FIG. 12 is a cross-sectional view showing a structure of a display device of the seventh embodiment in an open position.
[FIG. 13] FIG. 13 is a cross-sectional view showing a structure of a display device of an eighth embodiment in a closed position.
[FIG. 14] FIG. 14 is a cross-sectional view showing a structure of a display device of a ninth embodiment in an open position.
[FIG. 15] FIG. 15 is a side view showing a display device of a tenth embodiment when a cover member is in a closed position.
[FIG. 16] FIG. 16 is a plan view showing the display device of the tenth embodiment when the cover member is in an open position.
[FIG. 17] FIG. 17 is another side view showing the display device of the tenth embodiment when the cover member is in the open position.
[FIG. 18] FIG. 18 is a perspective view showing an external appearance of a conventional display device.

### DESCRIPTION OF EMBODIMENTS

Embodiments of the present invention will be described in detail hereinafter with reference to the accompanying drawings. Note that the present invention is not limited to the embodiments described below.

### <<First Embodiment of the Invention>>

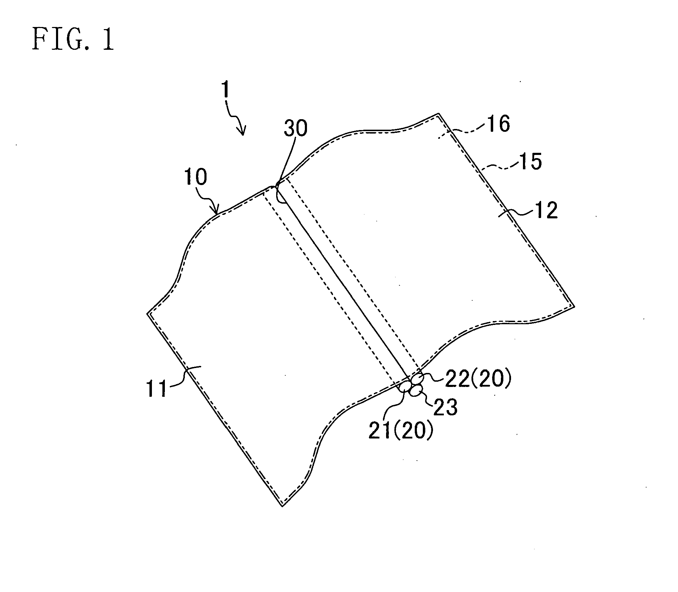

FIGS. 1-3 show a first embodiment of the present invention.

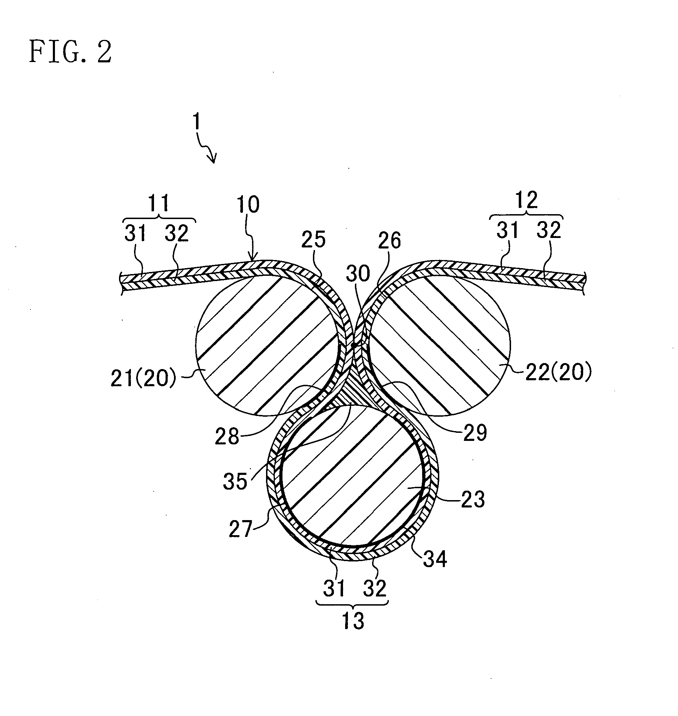

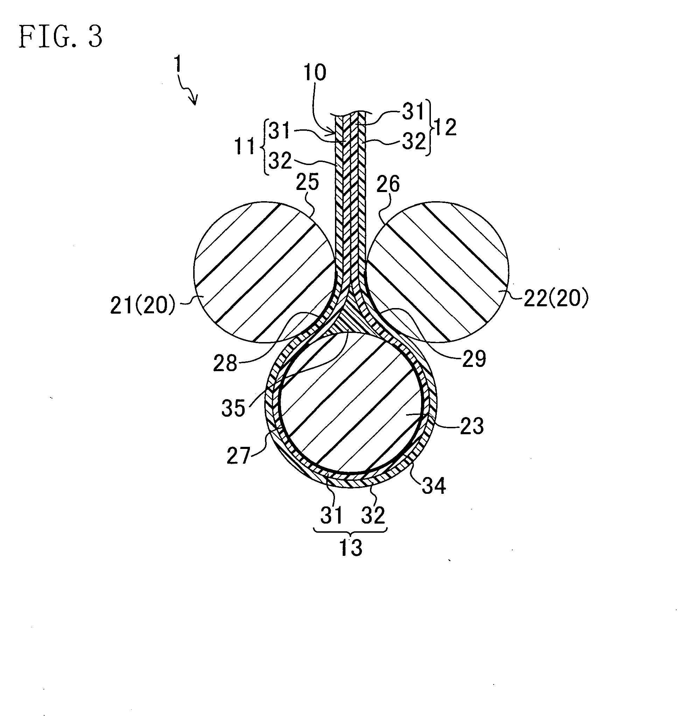

FIG. 1 is a perspective view showing an external appearance of a display device 1 of the first embodiment. FIG. 2 is a cross-sectional view showing a structure of the display device 1 of the first embodiment in an unfolded (open) position. FIG. 3 is a cross-sectional view showing a structure of the display device 1 of the first embodiment in a folded (closed) position.

### - Structure of Display Device -

The display device 1 of the first embodiment is an organic EL display device, and as shown in FIG. 1, includes a first display section 11, a second display section 12 disposed adjacent to the first display section 11, and a support member 20 which supports the first and second display sections 11 and 12.

In particular, as shown in FIG. 2, the display device 1 of the first embodiment includes a middle section 13 which joins the first and second display sections 11 and 12 together. The first display section 11, the second display section 12, and the middle section 13 constitute a single display panel 10.

### (Display Panel)

The display panel 10 is an organic EL display panel which includes a first substrate 31 and a second substrate 32 each of which is a flexible rectangular film-like substrate, and an emission layer (not shown) interposed therebetween serving as a display medium layer. In other words, the first and second display sections 11 and 12, which are a portion of the display panel 10, each include the flexible substrates. The display panel 10 has a thickness of, for example, about 30-100 µm.

The first and second substrates 31 and 32 are made of, for example, polyether sulfone (PES). Alternatively, the first and second substrates 31 and 32 may be the following substrates: a plastic substrate made of polyethylene naphthalate (PEN), polyimide (PI), etc.; a composite substrate which is a composite of the plastic substrate and glass fiber, glass cloth, etc.; a metal foil; etc.

The second substrate 32 is, for example, an active matrix substrate, which includes a plurality of pixels having a switching element, such as a thin-film transistor (TFT) etc., which are arranged in a matrix. The first and second display sections 11 and 12 are configured so that light of the emission layer (not shown) is emitted through the first substrate 31.

### (Support Member)

The support member 20 supports the first and second display sections 11 and 12 in a manner which allows the first and second display sections 11 and 12 to be transformed into a closed position where the two display sections are stacked on each other (see FIG. 3) and an open position where the two display sections are opened like a book (see FIGS. 1 and 2).

Specifically, the support member 20 includes a first support member 21 and a second support member 22 each of which is formed in the shape of a cylinder. The first and second support members 21 and 22 have the same diameter and length. For example, the first and second support members 21 and 22 have a radius of about 2 mm. The first and second support members 21 and 22 are made of, for example, a resin material, or alternatively, a metal material etc.

As shown in FIG. 2, the support member 20 is configured so that the first and second support members 21 and 22 sandwich the first and second display sections 11 and 12 from the second substrate 32. As a result, the first substrate 31 of the first display section 11 makes line contact with the first substrate 31 of the second display section 12. In the description that follows, the location of the line contact is referred to as a boundary 30 between the first and second display sections 11 and 12.

As shown in FIG. 2, the first support member 21 has a first convex surface portion 25 which supports a surface of the first display section 11 opposite to the second display section 12 when the first and second display sections 11 and 12 are transformed. On the other hand, the second support member 22 has a second convex surface portion 26 which supports a surface of the second display section 12 opposite to the first display section 11 when the first and second display sections 11 and 12 are transformed.

As shown in FIG. 2, the first convex surface portion 25 is formed in a region of a surface of the first support member 21 which contacts the first display section 11 in the open position and is opposite to the middle section 13 with respect to the boundary 30 between the first and second display sections 11 and 12.

The second convex surface portion 26 is formed in a region of a surface of the second support member 22 which contacts the second display section 12 in the open position and is opposite to the middle section 13 with respect to the boundary 30 between the first and second display sections 11 and 12.

The first display section 11 is attached to the first support member 21 by an adhesive material 28. The adhesive material 28 is provided in a region of the surface of the first support member 21 which contacts the first display section 11 and extends from the boundary 30 to the middle section 13.

On the other hand, the second display section 12 is similarly attached to the second support member 22 by an adhesive material 29. The adhesive material 29 is provided in a region of the surface of the second support member 22 which contacts the second display section 12 and extends from the boundary 30 to the middle section 13.

### (Middle Support Member)

The display device 1 further includes a middle support member 23 around which the middle section 13 is wound and supported. The middle support member 23 is formed in the shape of, for example, a cylinder having the same diameter and length as those of the first support member 21. The middle support member 23 is made of, for example, a resin material. Note that the middle support member 23 may be made of, for example, a metal material instead of resin.

The middle support member 23 has a third convex surface portion 27 which supports the middle section 13. Specifically, a surface of the middle support member 23 around which the middle section 13 is wound is formed in the third convex surface portion 27. The middle section 13 is attached to the middle support member 23 by an adhesive material 34 provided on the third convex surface portion 27. Here, a region of the display panel 10 contacting the middle support member 23 is the middle section 13.

Moreover, as shown in FIGS. 2 and 3, a gap between the middle support member 23 and the boundary 30 is filled with an adhesive material 35 which attaches the second substrate 32 of the first and second display sections 11 and 12 to the surface of the middle support member 23. By providing the adhesive material 35, the positional relationship between the first support member 21, the second support member 22, and the middle support member 23 is fixed.

### (Non-display Region)

A non-display region 15 is formed in the shape of a frame at an outer periphery of the display panel 10. Moreover, the middle section 13 is a non-display region. In addition, portions of the first and second display sections 11 and 12 in the open position which extend from the boundary 30 to the middle section 13 (i.e., a region which is not viewed by the user) are a non-display region.

Therefore, as shown in FIG. 1, in the display panel 10 in the open position, while the non-display region 15 is formed in the shape of a frame at the outer periphery, a display region 16 is formed in the entire inside of the frame. The display region 16 is configured to display an image which is continuous at the boundary 30.

In the non-display region 15, a drive circuit for driving the pixels formed in the display region 16, etc., are formed. Note that the non-display region 15 does not need to be provided along all the perimeter of the display panel 10 in the open position, and may be provided along at least a portion of the perimeter of the display panel 10 in the open position.

### - Transforming Operation of Display Device -

Next, transforming operation of the display device 1 of the first embodiment will be described.

As described above, the first and second display sections 11 and 12 each include flexible substrates made of, for example, PES, and therefore, can each be transformed along the first and second convex surface portions 25 and 26 of the support member 20, respectively. As a result, the display device 1 is transformed so that the first and second display sections 11 and 12 are disposed in the closed position (see FIG. 3) and the open position (FIGS. 1 and 2).

Specifically, as shown in FIG. 3, the first and second display sections 11 and 12 in the closed position are gradually opened, i.e., are moved away from each other while the surface of the first display section 11 opposite to the second display section 12 is supported by the first convex surface portion 25 of the first support member 21 and the surface of the second display section 12 opposite to the first display section 11 is supported by the second convex surface portion 26 of the second support member 22. The first and second display sections 11 and 12 are eventually opened like a book, i.e., in the open position.

In the open position, a predetermined image is displayed in the wide open display region 16 of the display panel 10, and is preferably viewed by the user.

On the other hand, similarly, the first and second display sections 11 and 12 in the open position are gradually closed, i.e., are moved toward each other while the surface of the first display section 11 opposite to the second display section 12 is supported by the first convex surface portion 25 and the surface of the second display section 12 opposite to the first display section 11 is supported by the second convex surface portion 26. The first and second display sections 11 and 12 are eventually stacked on each other, i.e., in the closed position.

In the closed position, the compacted display device 1 is preferably carried by the user.

### - Advantages of First Embodiment -

Therefore, according to the first embodiment, the first and second display sections 11 and 12 which include flexible substrates are sandwiched by the support member 20. Therefore, even if the first and second display sections 11 and 12 have a non-display region, the first and second display sections 11 and 12 can be transformed into the closed position or the open position while the non-display region is sandwiched and hidden by the support member 20. Therefore, when the first and second display sections 11 and 12 are in the open position, the non-display region cannot be viewed by the user, so that a single large image which is continuous at the boundary 30 between the first and second display sections 11 and 12 can be displayed. As a result, although the display device 1 is foldable or is allowed to open and close like a book, the quality of displaying can be significantly improved.

In addition, when the display panel 10 is in the closed position, the entire device becomes compact and can be easily carried. When the device is used, the display panel 10 can be easily transformed into the open position. The ease of handling of the device can be dramatically increased.

Moreover, the first and second display sections 11 and 12 and the middle section 13 are each a portion of the single display panel 10. Therefore, the number of parts can be reduced, so that the manufacture of the display device 1 can be facilitated.

Moreover, the middle section 13 is supported by the third convex surface portion 27 of the middle support member 23. Therefore, the first and second display sections 11 and 12 can be more stably supported and fixed by the support member 20.

Moreover, the first and second display sections 11 and 12 are supported by the support member 20 and the middle support member 23 while being bent into a concave-convex shape. Therefore, the concentration of stress applied to the first and second substrates 31 and 32 can be reduced, resulting in an increase in reliability.

### <<Second Embodiment of the Invention>>

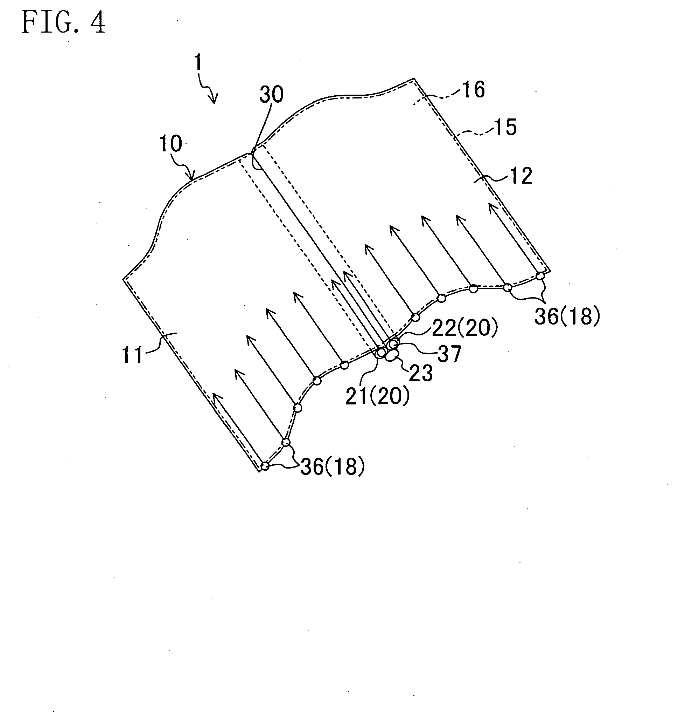

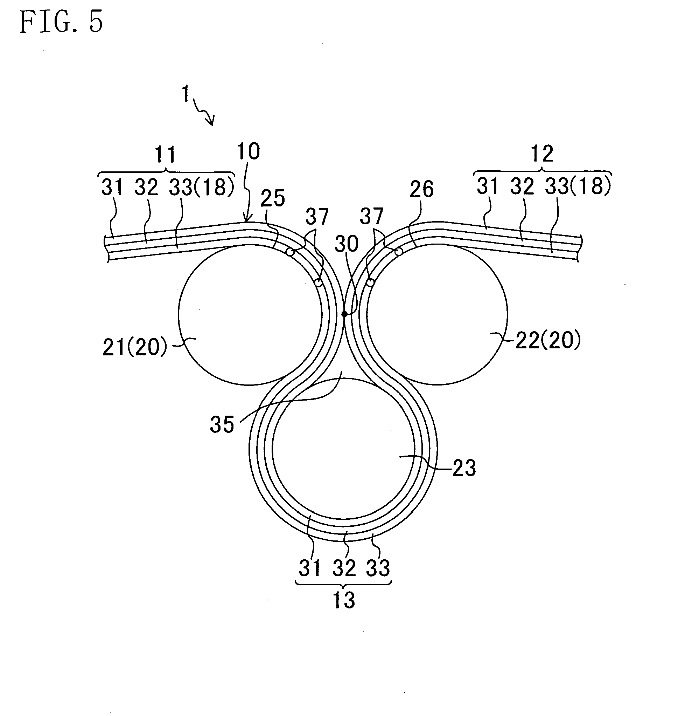

FIGS. 4 and 5 show a second embodiment of the present invention.

FIG. 4 is a perspective view showing an external appearance of a display device 1 of the second embodiment. FIG. 5 is a side view showing the display device 1 of the second embodiment in an open position. Note that the same parts as those of FIGS. 1-3 are indicated by the same reference characters and will not be described in detail in the embodiments described below.

While the display device 1 of the first embodiment is an organic EL display device, the display device 1 of the second embodiment is a liquid crystal display device.

### (Display Panel)

Specifically, as shown in FIG. 5, the display panel 10 is a liquid crystal display panel which includes a first substrate 31 and a second substrate 32 each of which is a flexible rectangular film-like substrate made of PES etc., and a liquid crystal layer (not shown) interposed therebetween serving as a display medium layer. The first and second display sections 31 and 32 each have a thickness of about 25 µm.

Alternatively, as in the first embodiment, the first and second substrates 31 and 32 may be the following substrates: a plastic substrate made of polyethylene naphthalate (PEN), polyimide (PI), etc.; a composite substrate which is a composite of the plastic substrate and glass fiber, glass cloth, etc.; a metal foil; etc.

The thickness of the display panel 10 (i.e., the total thickness of the first substrate 31, the second substrate 32, and the liquid crystal layer) is preferably about 10-100 µm, depending on the substrate material, because stress is easily concentrated if the display panel 10 is excessively thin and soft, and the display panel 10 is not easily bent if the display panel 10 is excessively thick.

A color filter (not shown), a common electrode (not shown), etc. are formed on the first substrate 31 and are covered with an alignment film (not shown). Also, a plurality of photospacers which have a height which determines the thickness of the liquid crystal layer are formed at predetermined intervals on the first substrate 31. The photospacer is made of a photosensitive resin. Note that the photospacer may be a particulate spacer made of a resin etc.

The second substrate 32 is, for example, an active matrix substrate, which includes a plurality of pixels arranged in a matrix. Each pixel includes a TFT (not shown) as a switching element, a pixel electrode (not shown) connected thereto, etc. These elements are covered with an alignment film (not shown).

The liquid crystal layer is enclosed between the first and second substrates 31 and 32 and surrounded by a frame-like sealing member (not shown). The sealing member may be made of a non-conductive resin having high adhesiveness, such as an epoxy resin etc., more preferably a thermoplastic resin having high elasticity, such as a silicone resin, a thermoplastic elastomer, etc. The liquid crystal material may be, for example, a nematic liquid crystal, or alternatively, a cholesteric liquid crystal, a smectic liquid crystal, etc.

Although not shown, a polarizing plate is provided on opposite outer sides of the display panel 10. The polarizing plate has a thickness of, for example, about 65 µm.

### (Backlight)

The display device 1 of the second embodiment includes a backlight 18 as an illumination section which is stacked on the display panel 10. The backlight 18 includes a plurality of LEDs 36 as a light source, and a light guide plate 33 on which light of the LEDs 36 is incident. In other words, the first and second display sections 11 and 12 each have a backlight.

The light guide plate 33 is provided on a side of the second substrate 32 opposite to the first substrate 31, as well as the first and second substrates 31 and 32, are supported by the support member 20 and the middle support member 23. The light guide plate 33 is made of, for example, a relatively soft material, such as a silicone resin etc., and has a thickness of, for example, about 0.7 mm.

As shown in FIG. 4, the LEDs 36 are provided at predetermined intervals in a non-display region 15 at an edge of the display panel 10 which intersects the longitudinal direction of the support member 20. The LEDs 36 supply light to the light guide plate 33 of the first and second display sections 11 and 12.

Moreover, in the second embodiment, as shown in FIG. 5; LEDs 37 as an auxiliary light source for emitting light are provided in a region of the light guide plate 33 supported by the first convex surface portion 25 of the first support member 21 and in a region of the light guide plate 33 supported by the second convex surface portion 26 of the second support member 22. As a result, the luminance of the display panel 10 is increased in the vicinity of the boundary 30.

Note that when the display panel is of the reflective type, the backlight 18, or the backlight 18 and the polarizing plates, may be removed.

### (Support Member and Middle Support Member)

The support member 20 and the middle support member 23 have a structure similar to that of the first embodiment, except that the support members 20 and 23 each have a thickness of about 5 mm in order to support the light guide plate 33 in addition to the first and second substrates 31 and 32.

### - Advantages of Second Embodiment -

Therefore, as is similar to the first embodiment, the display device 1 of the second embodiment can be transformed into an open position and a closed position, and a single large image which is continuous at the boundary 30 can be displayed. As a result, although the display device 1 of the second embodiment is foldable or is allowed to open and close like a book, the quality of displaying can be significantly improved.

In addition, the LEDs 37 are provided as an auxiliary light source. Therefore, the luminance of display light can be increased by light of the LEDs 37 at the boundary 30 between the first and second display sections 11 and 12, resulting in an improvement in viewability of the display.

### <<Third Embodiment of the Invention>>

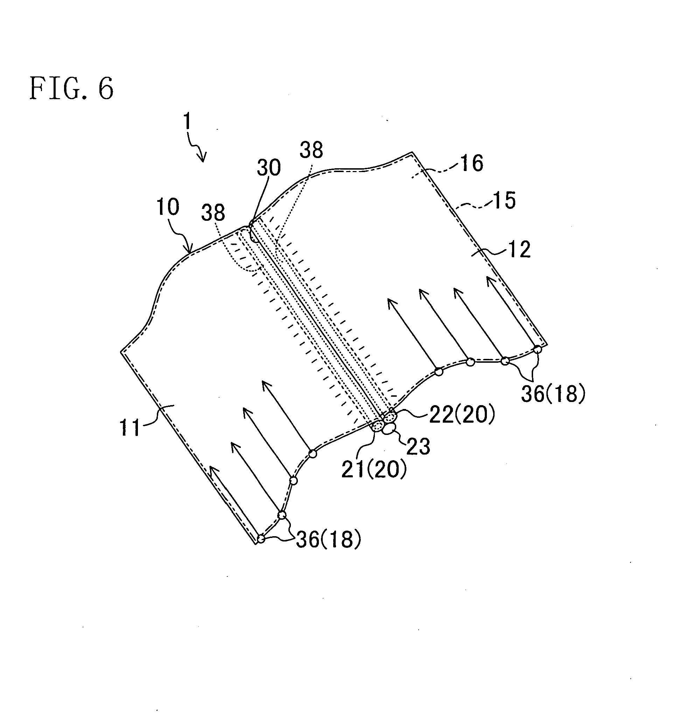

FIG. 6 shows a third embodiment of the present invention.

FIG. 6 is a perspective view showing an external appearance of the display device 1 of the third embodiment.

The display device 1 of the third embodiment is a liquid crystal display device as in the second embodiment. In the second embodiment, light of the LEDs 37 as an auxiliary light source is incident on the light guide plate 33 in the vicinity of the boundary 30. Alternatively, in the third embodiment, an auxiliary light source 38 which illuminates regions in the vicinity of the first and second convex surface portions 25. and 26 is provided in the support member 20.

Specifically, the first and second support members 21 and 22 of the third embodiment each include a cylindrical transparent member in which, for example, a fluorescent tube 38 is provided as an auxiliary light source. The auxiliary light source of the third embodiment may be, for example, a plurality of LEDs arranged in a line in addition to the fluorescent tube 38.

### - Advantages of Third Embodiment -

Therefore, according to the third embodiment, as is similar to the first embodiment, although the display device 1 is foldable or is allowed to open and close like a book, the quality of displaying can be significantly improved. In addition, regions in the vicinity of the first and second convex surface portions 25 and 26 where the display panel 10 is bent can be brightly illuminated by the fluorescent tube 38, whereby the viewability of the display can be improved.

### <<Fourth Embodiment of the Invention>>

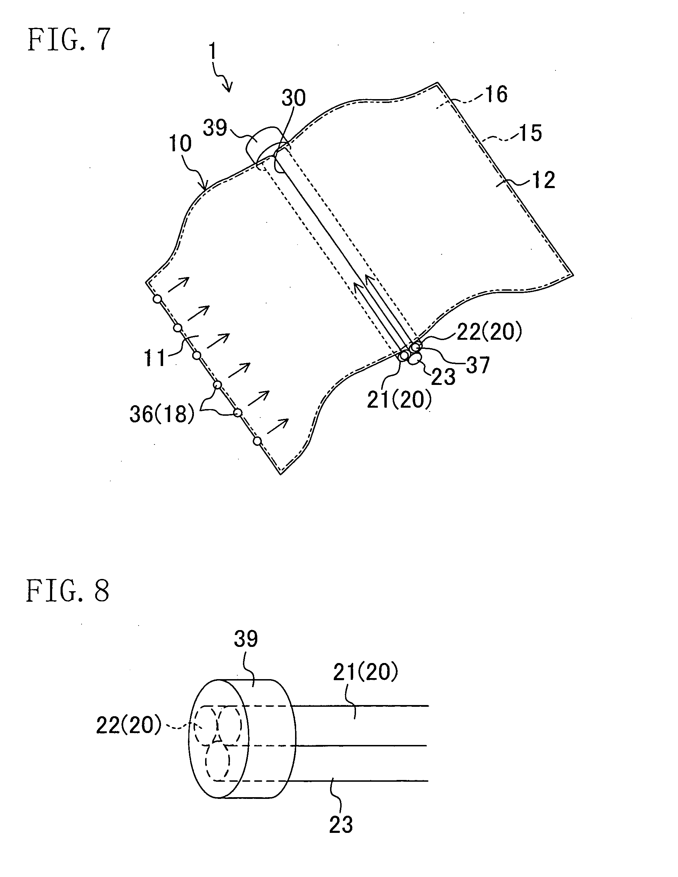

FIGS. 7 and 8 show a fourth embodiment of the present invention.

FIG. 7 is a perspective view showing an external appearance of the display device 1 of the fourth embodiment. FIG. 8 is an enlarged perspective view showing a region in the vicinity of a fixing member 39 of the display device 1 of the fourth embodiment.

The display device 1 of the fourth embodiment is a liquid crystal display device as in the second embodiment. In the fourth embodiment, a plurality of LEDs 36 as a light source for a backlight 18 are provided on an edge of the display panel 10 parallel to the longitudinal direction of the support member 20. The LEDs 36 are arranged at predetermined intervals in a non-display region at the edge of the display panel 10.

The fixing member 39 which fixes together end portions of the first and second support members 21 and 22 and an end portion of the middle support member 23 is provided at one end of the support member 20 and the middle support member 23. The fixing member 39 is formed in the shape of a cap having a concave portion (not shown). The end portions of the first support member 21, the second support member 22, and the middle support member 23 are fitted into the concave portion and are thereby fixed together.

Note that the fixing member 39 may be provided at either one end or both ends of the support member 20. If the middle support member 23 is not provided as described below, end portions of the first and second support members 21 and 22 may be fixed together by the cap-shaped fixing member 39.

### - Advantages of Fourth Embodiment -

Therefore, according to the fourth embodiment, advantages similar to those of the second embodiment are obtained, and the support member 20 and the middle support member 23 can be more securely fixed. Moreover, if the support member 20 and the middle support member 23 are fixed together at-both ends thereof by the fixing members 39, the adhesive materials 28, 29, 34, and 35 can be removed from the support member 20 and the middle support member 23. As a result, the product cost can be reduced.

### <<Fifth Embodiment of the Invention>>

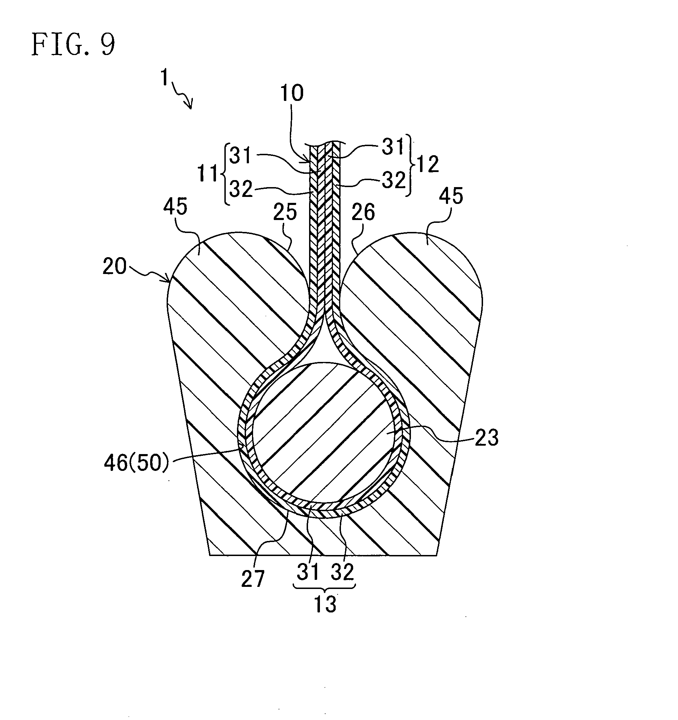

FIG. 9 shows a fifth embodiment of the present invention.

FIG. 9 is a cross-sectional view showing a structure of a display device 1 of the fifth embodiment in a closed position.

In the first embodiment, the support member 20 includes two members, i.e., the first and second support members 21 and 22. Alternatively, in the fifth embodiment, the support member 20 is a single member.

The support member 20 of the fifth embodiment has two convex elongated portions 45 and a trench portion 46 formed therebetween, and is made of, for example, a resin material. Note that the support member 20 may be made of other materials, such as a metal material etc.

The trench portion 46 accommodates the middle section 13 of the display panel 10 which is an organic EL display panel, while the two convex elongated portions 45 sandwiches the first and second display sections 11 and 12.

The display panel 10 is supported by the support member 20 with the middle section 13 being accommodated in the trench portion 46 and the first and second display sections 11 and 12 being sandwiched by the two convex elongated portions 45.

A first convex surface portion 25 and a second convex surface portion 26 are formed on the respective corresponding convex elongated portions 45. On the other hand, the trench portion 46 has a concave surface portion 50 which is formed to extend continuously from the first and second convex surface portions 25 and 26. As shown in FIG. 9, the concave surface portion 50 has an arc-shaped cross-section, and accommodates the middle section 13 and the middle support member 23.

The middle support member 23 has a structure similar to that of the first embodiment, and is formed in the shape of a cylinder having a third convex surface portion 27. While the middle support member 23 is accommodated in the trench portion 46, the middle section 13 is sandwiched by the third convex surface portion 27 and the concave surface portion 50 of the support member 20.

As a result, as in the first embodiment, the display device 1 can be transformed into an open position where the first and second display sections 11 and 12 are opened and a closed position where the first and second display sections 11 and 12 are stacked on each other.

If the support member 20 is made of a resin material having elasticity, the display device 1 can be manufactured by inserting the middle section 13 of the display panel 10 wound around the middle support member 23 into the trench portion 46 while the trench portion 46 is opened by expanding a gap between the two convex elongated portions 45.

On the other hand, if the support member 20 is made of a metal material which does not have elasticity, the display device 1 can be manufactured by sliding and inserting laterally, into the trench portion 46, the middle section 13 of the display panel 10 wound around the middle support member 23.

### - Advantages of Fifth Embodiment -

Therefore, according to the fifth embodiment, advantages similar to those of the first embodiment are obtained. In addition, although the entire support member 20 is a single member, the first and second display sections 11 and 12 and the middle section 13 can be stably supported and fixed. Moreover, the middle section 13 is sandwiched by the concave surface portion 50 of the support member 20 and the third convex surface portion 27 of the middle support member 23, whereby the first display section 11, the second display section 12, and the middle section 13 can be more securely supported and fixed. In addition, because the support member 20 is a single member, the display device 1 can be easily manufactured.

### <<Sixth Embodiment of the Invention>>

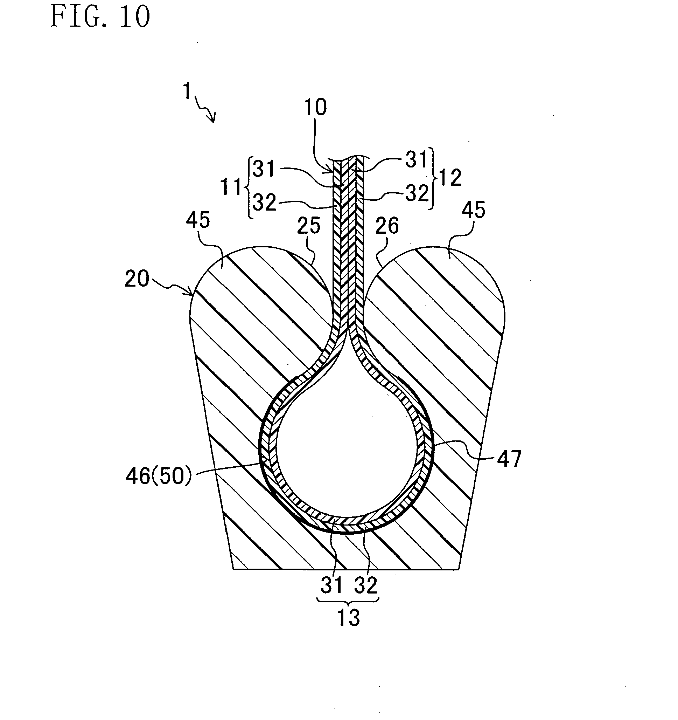

FIG. 10 shows a sixth embodiment of the present invention.

FIG. 10 is a cross-sectional view showing a structure of a display device 1 of the sixth embodiment in a closed position.

The sixth embodiment is similar to the fifth embodiment, except that the middle support member 23 is not provided.

Specifically, as in the fifth embodiment, the support member 20 has two convex elongated portions 45 which sandwiches the first and second display portions 11 and 12, and a trench portion 46 formed therebetween. The trench portion 46 has a concave surface portion 59 which is formed to extend continuously from the first and second convex surface portions 25 and 26 of the two convex elongated portions 45.

On the other hand, an adhesive material 47 is provided on substantially the entire concave surface portion 59. The middle section 13 of the display panel 10 is attached to the concave surface portion 59 by the adhesive material 47. As a result, the middle section 13 is supported by the concave surface portion 59 via the adhesive material 47.

### - Advantages of Sixth Embodiment -

Therefore, according to the sixth embodiment, advantages similar to those of the fifth embodiment are obtained. In addition, although the middle support member 23 is removed, the display panel 10 can be supported and fixed by the single support member 20. Therefore, the number of parts can be reduced, so that the product cost can be further reduced.

### <<Seventh Embodiment of the Invention>>

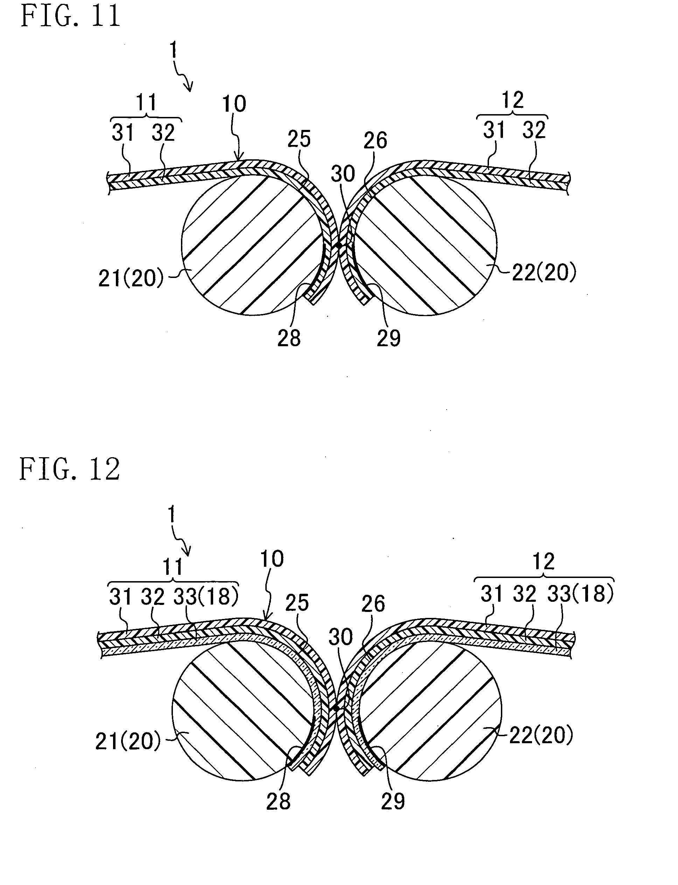

FIGS. 11 and 12 show a seventh embodiment of the present invention.

FIGS. 11 and 12 are cross-sectional views showing a display device 1 of the seventh embodiment in an open position. FIG. 11 shows the display device 1 which is an organic EL display device. On the other hand, FIG. 12 shows the display device 1 which is a liquid crystal display device.

In the first and second embodiments, the display panel 10 is a single panel including the first display section 11, the second display section 12, and the middle section 13. Alternatively, the display panel 10 of the seventh embodiment includes a first display section 11 and a second display section 12 which are separate from each other. In other words, the display panel 10 of the seventh embodiment includes two display panels.

As shown in FIGS. 11 and 12, the display device 1 includes a support member 20 including a first support member 21 and a second support member 22, and the display panel 10 including the first and second display sections 11 and 12. In other words, the display panel 10 does not have the middle section 13, and the display device 1 does not include the middle support member 23.

As in the first and second embodiments, the first display section 11 is attached to the first support member 21 by an adhesive material 28. On the other hand, the second display section 12 is attached to the second support member 22 by an adhesive material 29. The first and second display sections 11 and 12 are sandwiched and fixed by the first and second support members 21 and 22.

For example, the first and second support members 21 and 22 may be fixed together by attaching a cap-like fixing member 39, such as that described in the fourth embodiment, to the first and second support members 21 and 22 at both ends thereof.

### - Advantages of Seventh Embodiment -

Therefore, also in the seventh embodiment, the display panel 10 can be transformed into a closed position or an open position while non-display regions of the first and second display sections 11 and 12 are sandwiched and hidden by the support member 20. In the open position, a single large image which is continuous at a boundary 30 between the first and second display sections 11 and 12 can be displayed. As a result, although the display device 1 of the seventh embodiment is foldable or is allowed to open and close like a book, the quality of displaying can be significantly improved.

In addition, the middle support member 23 is not required, so that the number of parts can be reduced. Therefore, the size and product cost of the device can be reduced.

### <<Eighth Embodiment of the Invention>>

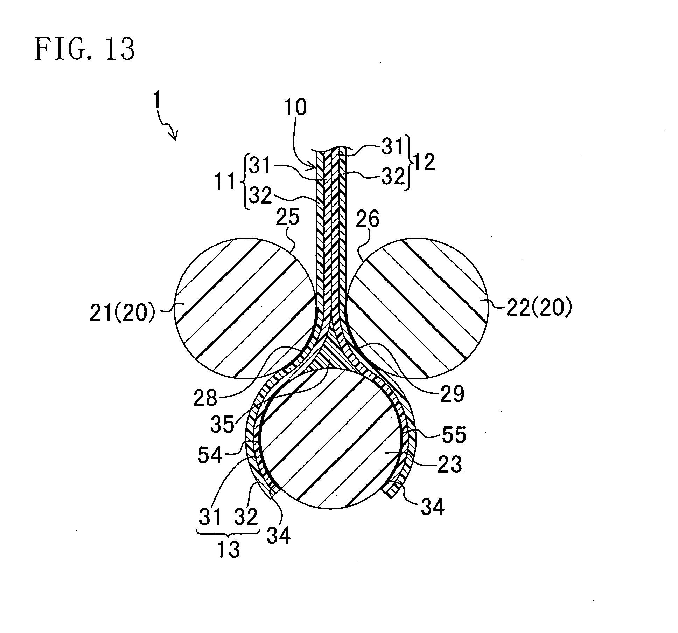

FIG. 13 shows an eighth embodiment of the present invention.

FIG. 13 is a cross-sectional view showing a structure of a display device 1 of the eighth embodiment in a closed position.

The display device 1 of the eighth embodiment includes two display panels (first and second display sections 11 and 12) 10 as is similar to the seventh embodiment, and further includes a middle support member 23 as is different from the seventh embodiment.

Specifically, as shown in FIG. 13, the middle support member 23 of the eighth embodiment is formed in the shape of a cylinder, and has a fourth convex surface portion 54 which supports a surface of the first display section 11 opposite to the first support member 21, and a fifth convex surface portion 55 which supports a surface of the second display section 12 opposite to the second support member 22.

The first display section 11 is attached to the fourth convex surface portion 54 by an adhesive material 34, while the second display section 12 is attached to the fifth convex surface portion 55 by an adhesive material 34.

Moreover, as in the first embodiment, a gap between the middle support member 23 and the first and second display sections 11 and 12 is filled with an adhesive material 35. By providing the adhesive material 35, the positional relationship between the first support member 21, the second support member 22, and the middle support member 23 is fixed. A surface of the middle support member 23 opposite to the adhesive material 35 is not covered with the first and second display sections 11 and 12 and therefore is exposed.

### - Advantages of Eighth Embodiment -

Therefore, according to the eighth embodiment, even when the display panel 10 includes two display panels (the first and second display sections 11 and 12) and is foldable or is allowed to open and close like a book, the quality of displaying can be significantly improved as in the first embodiment.

In addition, the first and second display sections 11 and 12 are supported by the support member 20 and the middle support member 23 while being bent into a concave-convex shape. Therefore, the concentration of stress applied to the first and second substrates 31 and 32 can be reduced, resulting in an increase in reliability.

### <<Ninth Embodiment of the Invention>>

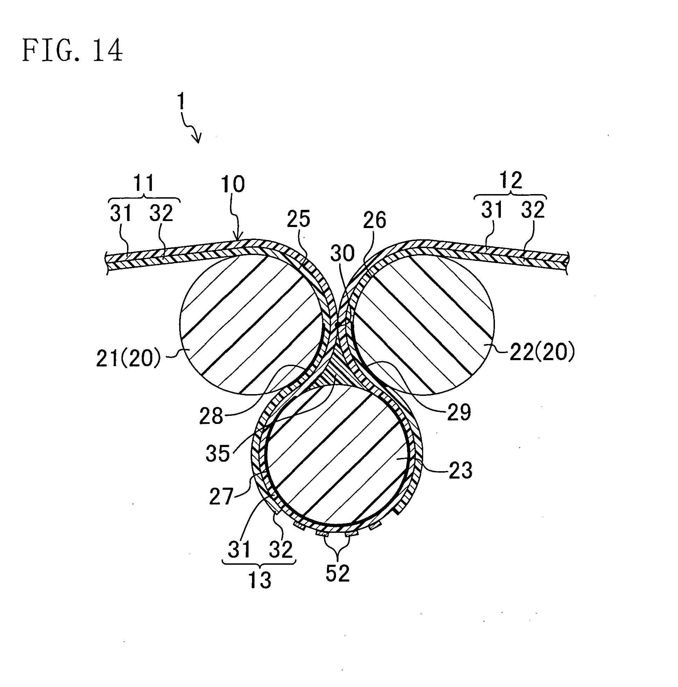

FIG. 14 shows a ninth embodiment of the present invention.

FIG. 14 is a cross-sectional view showing a display device 1 of the ninth embodiment in an open position.

As shown in FIG. 14, the display device 1 of the ninth embodiment is similar to that of the first embodiment, except that a circuit section 52 is provided in a region of the middle section 13 which is supported by the third convex surface portion 27.

Specifically, a portion of the second substrate 32 which is included in the middle section 13 and is opposite to the boundary 30 is removed. The circuit section 52 including a drive circuit for driving the display panel 10, etc., is formed on the first substrate 31 in the region from which the second substrate 32 is removed.

### - Advantages of Ninth Embodiment -

Therefore, according to the ninth embodiment, advantages similar to those of the first embodiment are obtained. In addition, the circuit section 52 is provided on the middle section 13, which is not involved in displaying, and therefore, the circuit section 52 can be provided while the available space is efficiently used. Moreover, because this region is not transformed, the reliability of the circuit section 52 can be increased.

### <<Tenth Embodiment of the Invention>>

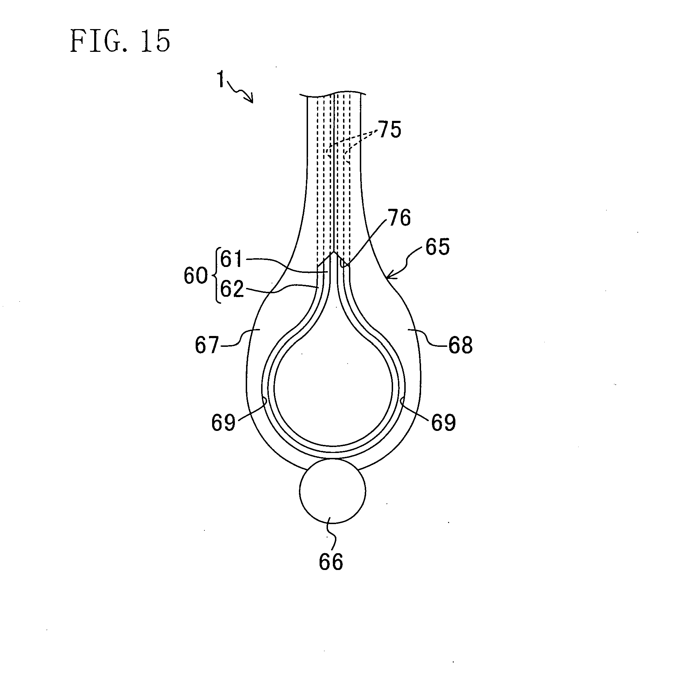

FIGS. 15-17 show a tenth embodiment of the present invention.

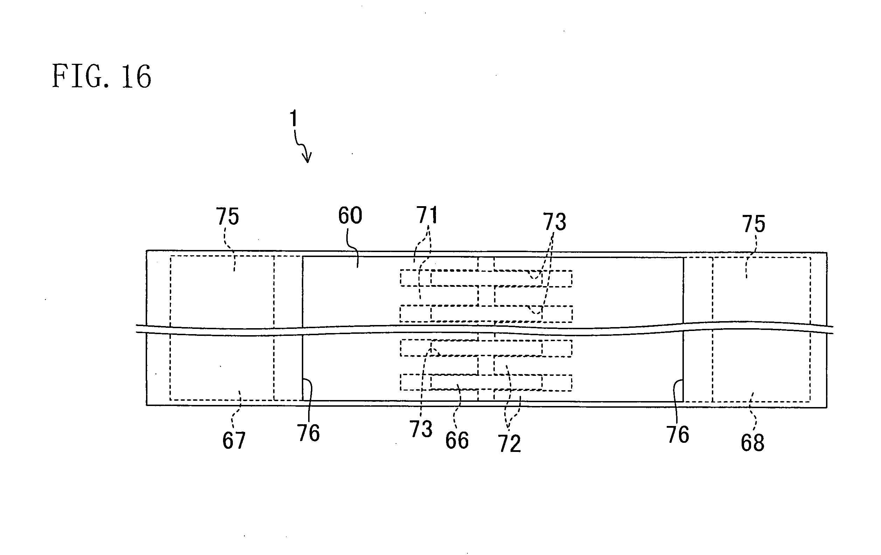

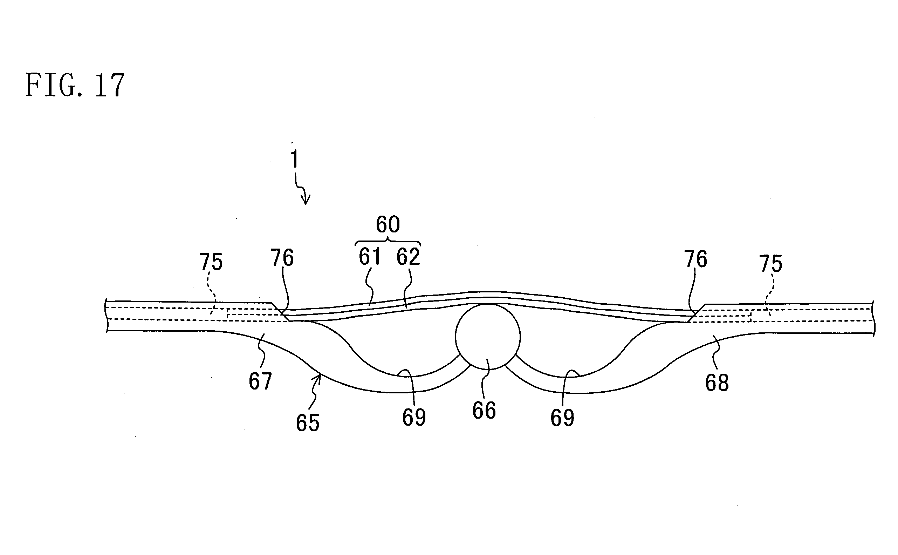

FIG. 15 is a side view showing a display device 1 of the tenth embodiment when a cover member 65 is in a closed position. FIG. 16 is a plan view showing the display device 1 of the tenth embodiment when the cover member 65 is in an open position. FIG. 17 is another side view showing the display device 1 of the tenth embodiment when the cover member 65 is in the open position.

The display device 1 of the tenth embodiment includes a flexible display panel 60 and the cover member 65 attached to the display panel 60.

### (Display Panel)

As shown in FIGS. 15 and 17, the display panel 60 is, for example, an organic EL display panel in which a first substrate 61 and a second substrate 62 each of which is a flexible rectangular film are joined together with an emission layer (not shown) as a display medium layer being interposed between the first and second substrates 61 and 62. The display panel 60 has a thickness of, for example, about 30-100 µm.

The first and second substrates 61 and 62 are made of, for example, polyether sulfone (PES). Alternatively, the first and second substrates 61 and 62 may be the following substrates: a plastic substrate made of polyethylene naphthalate (PEN), polyimide (PI), etc.; a composite substrate which is a composite of the plastic substrate and glass fiber, glass cloth, etc.; a metal foil; etc.

The second substrate 62 is, for example, an active matrix substrate, which includes a plurality of pixels having a switching element, such as a thin-film transistor (TFT) etc., which are arranged in a matrix. The display panel 60 is configured so that light of the emission layer (not shown) is emitted through the first substrate 61.

### (Cover Member)

As shown in FIGS. 15 and 17, the cover member 65 includes a cylindrical hinge section 66, and a first cover member 67 and a second cover member 68 which are engaged with the hinge section 66 in a manner which allows the first and second cover members 67 and 68 to swing.

By the first and second cover members 67 and 68 being swung around the shaft axis of the hinge section 66, the cover member 65 can be transformed into a closed position where the first and second cover members 67 and 68 are stacked on each other as shown in FIG. 15, and an open position where the first and second cover members 67 and 68 are opened with respect to each other as shown in FIGS. 16 and 17.

The first cover member 67, the second cover member 68, and the hinge section 66 are made of, for example, a resin material, or alternatively, may be made of a metal material etc.

As shown in FIG. 16, a plurality of nail portions 71 and 72 are formed at predetermined intervals on side portions of the first and second cover members 67 and 68, respectively. Engaging pins (not shown) protruding to the left and right sides are formed at tips of the nail portions 71 and 72.

On the other hand, as shown in FIG. 16, a plurality of guide grooves 73 are formed at predetermined intervals on the hinge section 66. The guide grooves 73 engage the nail portions 71 and 72, and guide the nail portions 71 and 72 of the swinging first and second cover members 67 and 68 so that the cover member 65 can be transformed into a closed position and an open position. The guide grooves 73 are each extended along a circumferential direction of the hinge section 66.

A pocket-like accommodation section 75 for accommodating a side portion of the display panel 60 is formed in each of the first and second cover members 67 and 68. The inside of the accommodation section 75 has a width which is slightly larger than the thickness of the display panel 60. The accommodation section 75 has a slit-like opening 76 through which the display panel 60 is moved back and forth by the transforming operation of the cover member 65.

A concave surface portion 69 is formed in each of the first and second cover members 67 and 68. The concave surface portion 69 has a concave curved surface which fits a surface of the display panel 60 which is bent into a convex shape when the cover member 65 is in the closed position. By providing the concave surface portions 69, the radius of curvature of the display panel 60 is maintained as large as possible, whereby the display panel 60 can be protected.

### - Transforming Operation of Display Device -

Next, transforming operation of the display device 1 of the tenth embodiment will be described.

As described above, the display panel 60 includes flexible substrates made of, for example, PES, and therefore, can be transformed by the cover member 65 being opened and closed.

Specifically, when the cover member 65 is transformed from the closed position shown in FIG. 15 to the open position shown in FIG. 17, the first cover member 67 rotates around the shaft axis of the hinge section 66 while the nail portion 71 is guided along the guide groove 73 of the hinge section 66 in one circumferential direction of the hinge section 66.

On the other hand, the second cover member 68 rotates around the shaft axis of the hinge section 66 while the nail portion 72 is guided along the guide groove 73 of the hinge section 66 in the opposite circumferential direction of the hinge section 66. Thus, the first and second cover members 67 and 68 are gradually moved away from each other, i.e., are opened. The first and second cover members 67 and 68 are eventually opened substantially flat, i.e., in the open position.

In the open position, a predetermined image is displayed in the wide open display panel 60, and is preferably viewed by the user.

On the other hand, when the cover member 65 is transformed from the open position shown in FIG. 17 to the closed position shown in FIG. 15, the first cover member 67 rotates around the shaft axis of the hinge section 66 while the nail portion 71 is guided along the guide groove 73 of the hinge section 66 in the opposite circumferential direction of the hinge section 66.

On the other hand, the second cover member 68 rotates around the shaft axis of the hinge section 66 while the nail portion 72 is guided along the guide groove 73 of the hinge section 66 in the one circumferential direction of the hinge section 66. Thus, the first and second cover members 67 and 68 are gradually moved toward each other, i.e., are closed. The first and second cover members 67 and 68 are eventually stacked on each other, i.e., in the closed position.

In the closed position, the compacted display device 1 is preferably carried by the user.

### - Advantages of Tenth Embodiment -

Therefore, according to the tenth embodiment, the display panel 60 includes the first and second substrates 61 and 62 which are a flexible substrate, and the display panel 60 is supported by the cover member 65 which can be transformed into an open position and a closed position. Therefore, the display device 1 can be transformed into a compact size by the cover member 65 being folded, and can be transformed into a large plane by the cover member 65 being opened.

In the open position, the display panel 60 has no boundary between the left and right portions thereof, whereby a single large continuous image can be displayed on the entire display panel 60. Therefore, although the display device 1 is foldable or is allowed to open and close like a book, the quality of displaying can be dramatically improved.

In addition, it is not necessary to provide a middle section which is a non-display region between the left and right regions of the display panel 60. In other words, a curved region of the display panel 60 which is curved when the cover member 65 is in the closed position can also be effectively used as a display region. As a result, while the size of the display device 1 in the closed position can be relatively reduced, the area of the display region in the open position can be increased.

Therefore, when the device is in the closed position, the entire device becomes compact and can be easily carried. On the other hand, when the device is used, the display panel 60 can be easily transformed into a wide open position. Thus, the ease of handling of the device can be dramatically increased.

Moreover, the foldable display device 1 is configured using the single display panel 60 without the display panel 60 being divided into a plurality of display sections. As a result, the number of parts can be reduced, so that the manufacture of the display device 1 can be facilitated.

Moreover, the pocket-like accommodation section 75 is provided in the cover member 65 so that the display panel 60 can be freely moved back and forth by the open and close operation of the cover member 65. As a result, the display panel 60 can be opened and closed while the display panel 60 is stably supported by the cover member 65.

### <<Other Embodiments>>

In the first to ninth embodiments, examples in which a member which supports the back side (a side opposite to the user) of the display panel 10 is not provided have been described. The present invention is not limited to this. Alternatively, a housing or a cover member which supports the back side of the display panel 10 may be provided. In this case, the shapes of the first and second display sections 11 and 12 can each be maintained flat, whereby the viewability of the display panel and the ease of handling of the device can be improved. Note that, from a point of view of a reduction in thickness and weight of the device, it is advantageous not to provide a housing or a cover member, as described above.

In the second embodiment, a transmissive liquid crystal display device has been described. Alternatively, the present invention is similarly applicable to a reflective liquid crystal display device, which does not have a backlight. In the tenth embodiment, an organic EL display device has been described. Alternatively, the present invention is similarly applicable to other display devices, such as transmissive and reflective liquid crystal display devices etc.

In the tenth embodiment, the accommodation section 75 is provided in the first and second cover members 67 and 68. The present invention is not limited to this. Alternatively, a support section which supports the display panel 60 in a manner which allows the display panel 60 to move back and forth when the cover member 65 is transformed, may be provided in the first and second cover members 67 and 68. For example, a band-shaped member whose both ends are connected to the first cover member 67 or the second cover member 68 may be configured as a support member, into which the display panel 60 may be inserted.

In the first to tenth embodiments, a liquid crystal display device and an organic EL display device have been described. Alternatively, the present invention is similarly applicable to other thin display devices.

### INDUSTRIAL APPLICABILITY

As described above, the present invention is useful for display devices at least a portion of which includes a flexible substrate.

### DESCRIPTION OF REFERENCE CHARACTERS

- 1: DISPLAY DEVICE
- 10: DISPLAY PANEL
- 11: FIRST DISPLAY SECTION
- 12: SECOND DISPLAY SECTION
- 13: MIDDLE SECTION
- 18: BACKLIGHT
- 20: SUPPORT MEMBER
- 21: FIRST SUPPORT MEMBER
- 22: SECOND SUPPORT MEMBER
- 23: MIDDLE SUPPORT MEMBER
- 25: FIRST CONVEX SURFACE PORTION
- 26: SECOND CONVEX SURFACE PORTION
- 27: THIRD CONVEX SURFACE PORTION
- 33: LIGHT GUIDE PLATE
- 36: LED (LIGHT SOURCE)
- 37: LED (AUXILIARY LIGHT SOURCE)
- 38: FLUORESCENT TUBE (AUXILIARY LIGHT SOURCE)
- 39: FIXING MEMBER
- 50: CONCAVE SURFACE PORTION
- 52: CIRCUIT SECTION
- 54: FOURTH CONVEX SURFACE PORTION
- 55: FIFTH CONVEX SURFACE PORTION

## Claims

1. A display device comprising:
a first display section;
a second display section disposed adjacent to the first display section; and
a support member configured to support the first and second display sections in a manner which allows the first and second display sections to be transformed into a closed position where the first and second display sections are stacked on each other and an open position where the first and second display sections are opened like a book,
wherein
the first and second display sections each include a flexible substrate, and
the support member is configured to sandwich the first and second display sections, and has a first convex surface portion which supports a surface of the first display section opposite to the second display section when the first and second display sections are transformed, and a second convex surface portion which supports a surface of the second display section opposite to the first display section when the first and second display sections are transformed.

2. The display device of claim 1, further comprising:
a middle section configured to link the first and second display sections together,
wherein
the first display section, the second display section, and the middle section constitute a single display panel.

3. The display device of claim 2, further comprising:
a middle support member configured to support the middle section while the middle section is wound around the middle support member,
wherein
a support surface of the middle support member around which the middle section is wound is formed in a third convex surface portion.

4. The display device of claim 2, wherein
the support member has a concave surface portion which is formed to extend continuously from the first and second convex surface portions, and
the middle section is supported by the concave surface portion.

5. The display device of claim 3, wherein
the support member has a concave surface portion which is formed to extend continuously from the first and second convex surface portions, and
the middle section is sandwiched by the concave surface portion and the third convex surface portion.

6. The display device of any one of claims 1-3, wherein
the support member has a first support member on which the first convex surface portion is formed and a second support member on which the second convex surface portion is formed.

7. The display device of claim 6, further comprising:
a fixing member configured to fix end portions of the first and second support members together.

8. The display device of claim 3, wherein
a circuit section is provided in a region of the middle section supported by the third convex surface portion.

9. The display device of claim 1, further comprising:
a middle support member having a fourth convex surface portion which supports a surface of the first display section opposite to the first support member, and a fifth convex surface portion which supports a surface of the second display section opposite to the second support member.

10. The display device of any one of claims 1-9, wherein
the first and second display sections are an organic EL display panel.

11. The display device of any one of claims 1-9, wherein
the first and second display sections are a liquid crystal display panel.

12. The display device of claim 11, wherein
the first and second display sections include a backlight including a plurality of light sources and a light guide plate on which light of the light sources is incident, and
the first and second display sections include an auxiliary light source configured to emit light to a region of the light guide plate of the backlight which is supported by the first and second convex surface portions.

13. The display device of any one of claims 1-12, wherein
an auxiliary light source configured to illuminate regions in the vicinity of the first and second convex surface portions is provided in the support member.

14. A display device comprising:
a display panel including a flexible substrate; and
a cover member configured to support the display panel in a manner which allows the display panel to be transformed into an open position and a closed position,
wherein
the cover member includes a hinge section, and a first cover member and a second cover member engaged by the hinge section in a manner which allows the first and second cover members to swing, and is configured to be transformed into the closed position where the first and second cover members are stacked on each other and the open position where the first and second cover members are opened with respect to each other, by the first and second cover members swinging around a shaft axis of the hinge section, and
a support section configured to support the display panel in a manner which allows the display panel to move back and forth when the cover member is transformed is formed on each of the first and second cover members.

15. The display device of claim 14, wherein
the support section is an accommodation section configured to accommodate a side portion of the display panel in a manner which allows the side portion to move back and forth.
